# EUROPEAN PATENT APPLICATION

(11) **EP 4 529 002 A1**
(43) Date of publication of application: **26.03.2025**
(21) Application number: 24201288.8
(22) Date of filing: 19.09.2024
(51) Int. Cl.: H02K 15/00, H02K 15/03, H02K 1/276, H02K 1/28

(54) **METHOD AND APPARATUS FOR ACTIVATING A ROTARY ELECTRIC MACHINE**

(30) Priority: 20.09.2023 IT 202300019338
(71) Applicant: LEITNER S.p.A., 39049 Vipiteno (BZ) (IT)
(72) Inventor: WALDHART, Florian, 39049 VIPITENO (BZ) (IT)
(74) Representative: Studio Torta S.p.A.

(57) **Abstract**

Method and apparatus for activating a rotary electric machine (2) provided with a stator (3) and with a rotor (4), according to which a first electrical conductor (24) is inserted through the stator (3) and a second electrical conductor (25) is inserted through a rotor sector (12) of the rotor (4) and is connected to the first electrical conductor (24) to define an electrical circuit (31), which extends around the entire rotor pole (17) of the rotor sector (12), and is powered so as to magnetize said rotor pole (17).

## Description

### CROSS-REFERENCE TO RELATED APPLICATIONS

This patent application claims priority from Italian patent application no. 102023000019338 filed on September 20, 2023, the entire disclosure of which is incorporated herein by reference.

### TECHNICAL FIELD

The present invention relates to a method for activating a rotary electric machine.

### BACKGROUND

The rotary electric machine comprises a stator, and a rotor rotatably coupled to the stator to rotate around a given rotation axis.

The stator comprises a cylindrical support body coaxial to the rotation axis, and a plurality of stator sectors evenly distributed around the rotation axis and fixed to said support body.

The rotor comprises a cylindrical support hub coaxial to the rotation axis, and a plurality of rotor sectors evenly distributed around the rotation axis and fixed to said support hub.

Each rotor sector radially faces the stator, and comprises a coupling member, which is substantially fork shaped, and is fixed to the support hub.

The coupling member is provided with a guide device, which extends from opposite sides of a radial plane of symmetry of the rotor sector, is radially open towards the stator, and further extends parallel to the rotation axis.

The guide device houses internally a rotor pole made of a magnetizable material comprising at least one permanent magnet, in particular a plurality of permanent magnets distributed according to at least one row of permanent magnets arranged in succession along the rotation axis.

Activation of the rotary electric machine requires the magnetization of the rotor poles and, hence, of the relative permanent magnets.

Further, as the intensity of the magnetic field of each rotor pole varies in time and decreases, at the end of a given interval of time, below a threshold value required to ensure correct interaction between the magnetic field generated by the stator and the magnetic field generated by the rotor, the process for activating the rotary electric machine must be repeated cyclically to re-establish from time to time the correct operation of the rotor poles.

The rotor poles and, consequently, the relative permanent magnets are magnetized by a magnetization flux having a given intensity.

Known methods used to magnetize the rotor poles of a rotary electric machine are generally of two kinds.

According to a first method, each rotor pole is firstly magnetized through a magnetization device and is then assembled in the guide device of the relative coupling member.

The known method for activating a rotary electric machine of the type described above has some drawbacks, mainly deriving from the fact that transport, handling, storage and assembly of the magnetized rotor poles are relatively complex and dangerous due to the presence of relatively high magnetic forces.

According to the other of the two known methodologies mentioned above, each rotor pole is firstly assembled in the guide device of the relative coupling member and is then magnetized by a magnetization device, which is inserted into the stator in place of at least part of a stator sector, and must be moved along the rotation axis so as to magnetize said rotor pole.

Since the magnetization device must be moved along the rotation axis, the known method for activating a rotary electric machine of the type described above has some drawbacks, mainly deriving from the fact that the magnetization device is relatively complex and costly and entails relatively long operating cycles.

### SUMMARY

The object of the present invention is to provide a method for activating a rotary electric machine which is without the drawbacks described above and which is simple and inexpensive to produce.

According to the present invention there is provided a method for activating a rotary electric machine as claimed in claims 1 to 7.

The present invention further relates to an apparatus for activating a rotary electric machine.

According to the present invention, there is provided an apparatus for activating a rotary electric machine as claimed in claims 8 to 15.

### BRIEF DESCRIPTION OF THE DRAWINGS

The present invention will now be described with reference to the accompanying drawings, which illustrate a non-limiting example of embodiment thereof, wherein:
Fig. 1 is a schematic side view, with parts removed for clarity, of a preferred embodiment of the apparatus of the present invention and of a rotary electric machine;
Fig. 2 is a schematic plan view, with parts removed for clarity, of a first detail of Fig. 1;
Fig. 3 is a schematic perspective view, with parts removed for clarity, of a second detail of Fig. 1;
Fig. 4 is a schematic plan view, with parts removed for clarity, of a detail of Fig. 3; and
Fig. 5 is a schematic side view, with parts removed for clarity, of the detail of Fig. 4.

### DESCRIPTION OF EMBODIMENTS

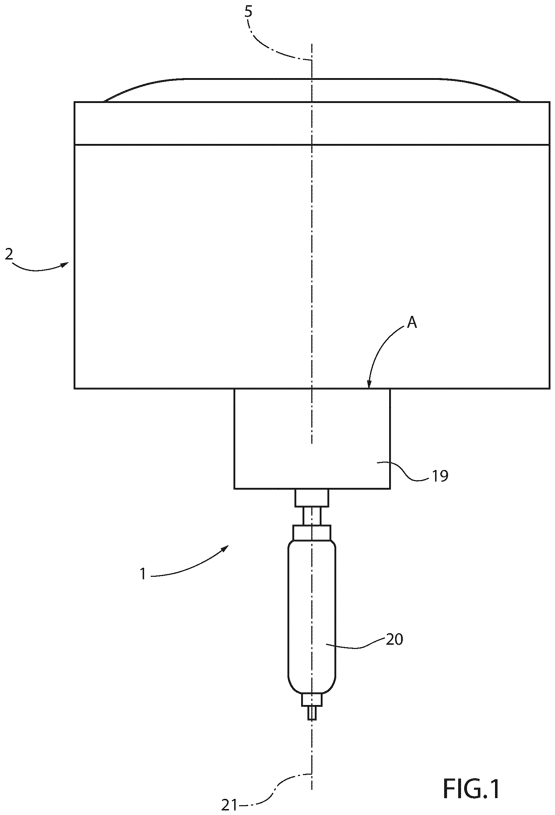

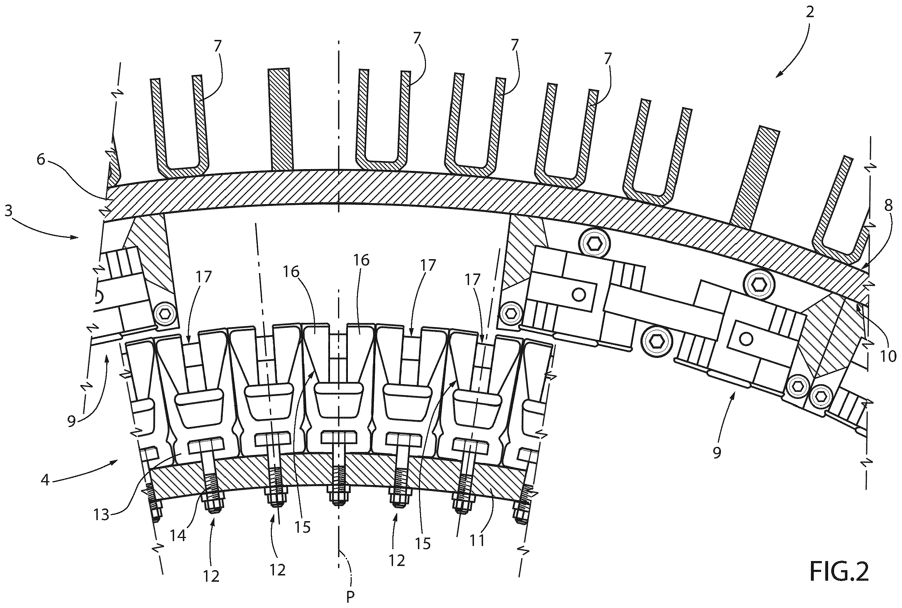

With reference to Figs. 1 and 2, the reference number 1 indicates, as a whole, an apparatus for activating a rotary electric machine 2 of known type usable as electric generator, for example, in a wind plant for the production of electrical energy or as electric motor, for example, in a cable transport system.

The electric machine 2 comprises a stator 3 and a rotor 4, which is coupled rotatably to the stator 3 to rotate, with respect to said stator 3, around a rotation axis 5.

The stator 3 comprises a tubular support body 6 having a cylindrical shape coaxial to the axis 5; and a plurality of cooling fins 7, which are distributed around the axis 5, are substantially U-shaped, and are fixed to an outer face 8 of said body 6.

The stator 3 further comprises a plurality of stator sectors 9, which are evenly distributed around the axis 5, are fixed to an inner face 10 of the body 6, and extend along said axis 5.

The rotor 4 comprises a tubular support hub 11, which has a cylindrical shape coaxial to the axis 5, extends inside the body 6, and is rotatably coupled to the body 6 through the interposition of at least one rolling bearing, known and not shown, to rotate, with respect to the body 6, around said axis 5.

The rotor 4 further comprises a plurality of rotor sectors 12, which are evenly distributed around the axis 5, are mounted between the stator sectors 9 and the hub 11, and extend along said axis 5.

Each sector 12 comprises a support fork 13, which extends parallel to the axis 5, is connected to the hub 11 through a plurality of fixing screws 14, and is arranged with its concavity facing the stator 3.

The fork 13 supports a guide device 15 comprising two longitudinal guide members 16, which extend parallel to the axis 5, are arranged on opposite sides of a radial plane P of symmetry of the fork 13, and house internally a rotor pole 17 made of a magnetizable material.

The pole 17 comprises a plurality of permanent magnets 18, in the present case four magnets 18, which extend along the axis 5, and are radially aligned with one another.

According to some variants, not shown:
the pole 17 comprises a number of magnets 18 other than four;
and
the magnets 18 are aligned with one another both radially and along the axis 5.

The apparatus 1 comprises a support base 19, which defines a substantially horizontal support surface A for the electric machine 2, and supports an electric motor 20, an output shaft (not shown) of which has a longitudinal axis 21 parallel to the axis 5, and carries fitted thereon a pinion (not shown) configured to couple with a sprocket (not shown) obtained inside the hub 11 coaxially to said axis 5.

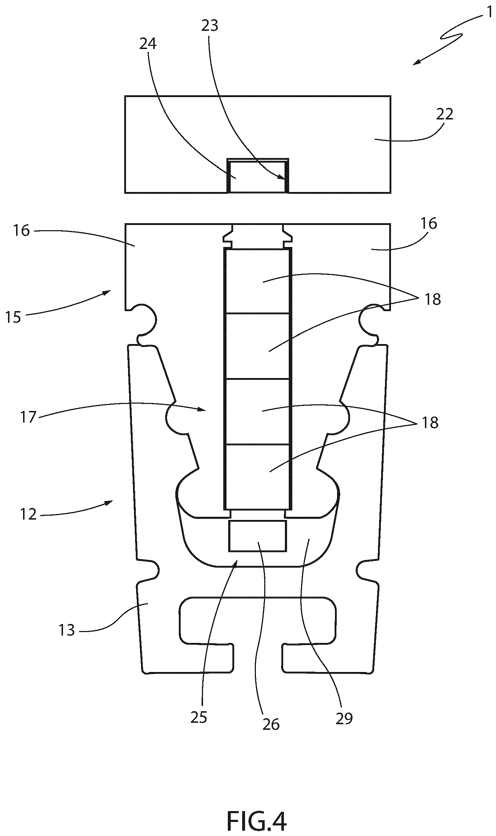

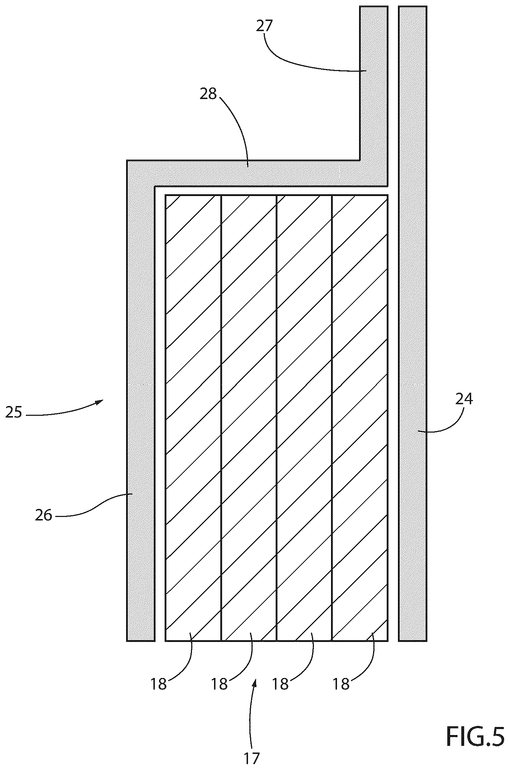

As shown in Figs. 4 and 5, the apparatus 1 further comprises a magnetization sector 22, which is substantially U-shaped, and further has a contour substantially corresponding to the contour of a stator sector 9, and defines a seat 23 configured to house internally a first rectilinear conductor bar 24 parallel to the axis 5.

The bar 24 is made in one piece, has a length, measured parallel to the axis 5, at least equal to a length of a pole 17, also measured parallel to the axis 5, and cooperates with a second conductor bar 25.

The bar 25 is made in one piece, and comprises two parallel elongated portions 26, 27 connected to one another through a third portion 28 perpendicular to said portions 26, 27.

The portion 26 has a length at least equal to a length of a pole 17 measured parallel to the axis 5, and the portion 28 has a length slightly longer than a width of a pole 17 measured crosswise to said axis 5.

Operation of the apparatus will now be described with reference to Figs. 1, 3, 4, and 5, assuming the magnetization of a rotor sector 12, and starting from the instant in which: the electric machine 2 has been mounted on the base 19 (Fig. 1) ;

the pinion (not shown) of the motor 20 and the sprocket (not shown) of the hub 11 have been coupled to each other;
a stator sector 9 has been removed from the stator 3 and
replaced with the magnetization sector 22, which is inserted through the stator 3 parallel to the axis 5 so that the relative bar 24 is radially facing the rotor 4 and the pole 17 of the sector 12 considered (Fig. 4); and
the bar 25 has been inserted parallel to the axis 5 through the sector 12 considered and in a cavity 29 defined between the fork 13 and the guide device 15 of the sector 12 considered (Fig. 4).

After the bar 25 has been inserted in the cavity 29, the portion 26 extends axially along the pole 17 and radially faces the pole 17, and the portion 28 extends radially along the pole 17 and axially faces said pole 17.

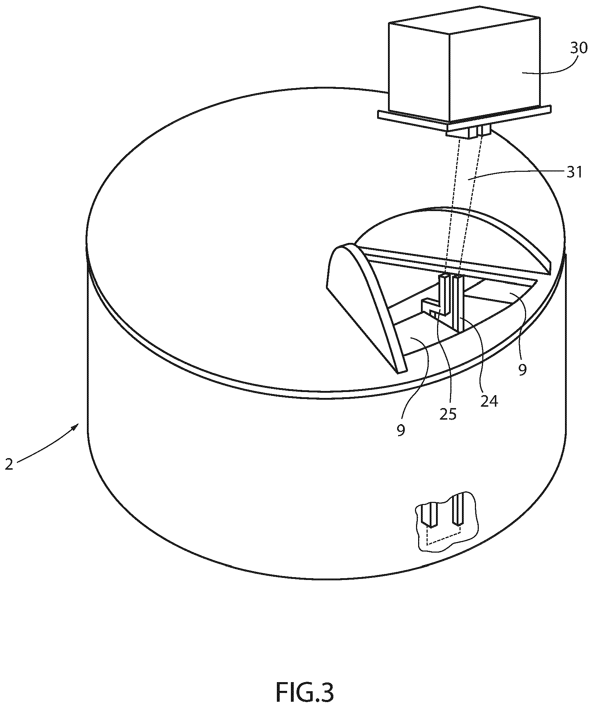

At this point, the bars 24 and 25 are connected to one another and to a pulse transformer 30 to define a closed electrical circuit 31 (Fig. 3), which extends around the entire pole 17, and is powered to generate a magnetic field configured to magnetize the magnets 18 of said pole 17.

After magnetization of the pole 17 considered has been completed, the bars 24 and 25 are disconnected from one another and from the transformer 30, the bar 25 is removed from the sector 12 considered, and the motor 20 is activated to move the rotor 4 around the axis 5 and bring the pole 17 of a new sector 12 to radially face the bar 24.

At this point, the operating cycle for magnetization of the apparatus 1 is repeated to magnetize the pole 17 of the new sector 12.

The apparatus 1 offers some advantages, mainly deriving from the fact that each pole 17 of the rotor 4 is magnetized in a relatively simple, rapid and inexpensive manner during a single operating cycle of said apparatus 1.

According to a variant, not shown, each bar 24, 25 comprises a plurality of segments arranged in series to one another and has a different shape to that shown in the accompanying figures.

## Claims

1. - A method for activating a rotary electric machine (2) comprising a rotor (4), which is mounted so as to rotate around a rotation axis (5) and comprises, in turn, a plurality of rotor sectors (12) distributed around the rotation axis (5) and each provided with a respective rotor pole (17) made of a magnetizable material, and a stator (3), which comprises, in turn, a plurality of stator sectors (9) distributed around the rotation axis (5); the method being **characterized in that** it comprises the steps of:
inserting a first electrical conductor (24) through the stator (3) parallel to the rotation axis (5);
inserting a second electrical conductor (25) through a first rotor sector (12) parallel to the rotation axis (5);
electrically connecting the two electrical conductors (24, 25) to one another so as to define an electrical circuit (31) extending around the entire rotor pole (17) of the first rotor sector (12); and
powering the electrical circuit (31) so as to magnetize the rotor pole (17) of the first rotor sector (12).

2. - The method according to claim 1 and further comprising the step of:
removing at least part of a stator sector (9) so as to allow the first electrical conductor (24) to be inserted through the stator (3).

3. - The method according to claim 1 or 2 and further comprising the steps of:
removing the second electrical conductor (25) from the first rotor sector (12);
moving the rotor (4) around the rotation axis (5) so that the rotor pole (17) of a second rotor sector (12) faces the first electrical conductor (24);
inserting the second electrical conductor (25) through the second rotor sector (12);
electrically connecting the two electrical conductors (24, 25) to one another so that the electrical circuit (31) extends around the entire rotor pole (17) of the second rotor sector (12); and
powering the electrical circuit (31) so as to magnetize the rotor pole (17) of the second rotor sector (12).

4. - The method according to any one of the preceding claims and further comprising the steps of:
mounting the rotary electric machine (2) on a support base (19); and
coupling the rotor (4) to an operating device (20) mounted on the support base (19) and configured to move the rotor (4) around the rotation axis (5).

5. - The method according to any one of the preceding claims and further comprising the step of:
powering the electrical circuit (31) through a pulse transformer (30).

6. - The method according to any one of the preceding claims, wherein the first electrical conductor (24) has an axial length, measured parallel to the rotation axis (5), at least equal to a length of a rotor pole (17), also measured parallel to the rotation axis (5).

7. - The method according to any one of the preceding claims, wherein the second electrical conductor (25) has an axial length, measured parallel to the rotation axis (5), at least equal to a length of a rotor pole (17), also measured parallel to the rotation axis (5), and further has a radial width, measured crosswise to the rotation axis (5), at least equal to a width of a rotor pole (17), also measured crosswise to the rotation axis (5).

8. - An apparatus for activating a rotary electric machine (2) comprising a rotor (4), which is mounted so as to rotate around a rotation axis (5) and comprises, in turn, a plurality of rotor sectors (12) distributed around the rotation axis (5) and each provided with a respective rotor pole (17) made of a magnetizable material, and a stator (3), which comprises, in turn, a plurality of stator sectors (9) distributed around the rotation axis (5); the apparatus being **characterized in that** it comprises:
a first electrical conductor (24), which can be inserted through the stator (3) parallel to the rotation axis (5);
a second electrical conductor (25), which can be inserted through a rotor sector (12) parallel to the rotation axis (5); connection means to electrically connect the two electrical conductors (24, 25) to one another so as to define an electrical circuit (31) extending around the entire rotor pole (17) of the rotor sector (12); and
a powering device (30) to power the electrical circuit (31) so as to magnetize the rotor pole (17) of the rotor sector (12).

9. - The apparatus according to claim 8 and further comprising a support base (19), which defines a support surface (A) for the rotary electric machine (2), and an operating device (20), which is mounted on the support base (19) and is configured to move the rotor (4) around the rotation axis (5).

10. - The apparatus according to claim 8 or 9, wherein the powering device (30) comprises a pulse transformer.

11. - The apparatus according to any one of the claims from 8 to 10, wherein the first electrical conductor (24) has an axial length, measured parallel to the rotation axis (5), at least equal to a length of a rotor pole (17), also measured parallel to the rotation axis (5).

12. - The apparatus according to any one of the claims from 8 to 11, wherein the second electrical conductor (25) has an axial length, measured parallel to the rotation axis (5), at least equal to a length of a rotor pole (17), also measured parallel to the rotation axis (5), and further has a radial width, measured crosswise to the rotation axis (5), at least equal to a width of a rotor pole (17), also measured crosswise to the rotation axis (5).

13. - The apparatus according to any one of the claims from 8 to 12, wherein the second electrical conductor (25) comprises a first portion (26) extending along the rotor pole (17) parallel to the rotation axis (5) and a second portion (28) extending along the rotor pole (17) crosswise to the rotation axis (5).

14. - The apparatus according to any one of the claims from 8 to 13 and further comprising a magnetization sector (22), which has the shape of a stator sector (9), is configured to be inserted in the stator (3) in the place of a stator sector (9) and supports the first electrical conductor (24).

15. - The apparatus according to any one of the claims from 8 to 14, wherein each rotor sector (12) comprises a coupling member (13), which is fixed to a central hub (11) of the rotor (4) and is configured to receive and hold the relative rotor pole (17); the second electrical conductor (25) being configured to be inserted in the rotor sector (12) in a cavity (29) obtained between the coupling member (13) and the rotor pole (17).
